# EUROPEAN PATENT SPECIFICATION

(11) **EP 4 300 278 B1**
(45) Date of publication and mention of the grant of the patent: **10.09.2025**
(21) Application number: 22762353.5
(22) Date of filing: 07.02.2022
(51) Int. Cl.: G06F 3/0483, G06F 3/04847, G06F 3/0485, G06F 3/04883, G06F 3/04886, G06F 9/451

(54) **AUTOMATIC BROWSING METHOD, TERMINAL, AND COMPUTER-READABLE STORAGE MEDIUM**
AUTOMATISCHES SUCHVERFAHREN, ENDGERÄT UND COMPUTERLESBARES SPEICHERMEDIUM
PROCÉDÉ DE NAVIGATION AUTOMATIQUE, TERMINAL ET SUPPORT DE STOCKAGE LISIBLE PAR ORDINATEUR

(30) Priority: 02.03.2021 CN 202110231641
(43) Date of publication of application: 03.01.2024
(73) Proprietor: GUANGDONG OPPO MOBILE TELECOMMUNICATIONS CORP., LTD., Dongguan, Guangdong 523860 (CN)
(72) Inventor: LI, Han, Dongguan, Guangdong 523860 (CN); KONG, Fanxiu, Dongguan, Guangdong 523860 (CN); WAN, Yilun, Dongguan, Guangdong 523860 (CN)
(74) Representative: Novagraaf Technologies
(86) International application number: PCT/CN2022/075414
(87) International publication number: WO 2022/183886

(56) References cited:
- CN-A- 105 094 643
- CN-A- 105 892 872
- CN-A- 106 066 751
- CN-A- 108 628 522
- CN-A- 109 358 795
- KR-A- 20200 048 786
- US-A1- 2013 016 129
- US-B1- 6 259 432

## Description

### TECHNICAL FIELD

The present disclosure relates to the field of terminal technologies, and in particular to an automatic browsing method, a terminal, and a computer-readable storage medium.

### BACKGROUND

With the continuous development of terminal technology, the functions of terminals are becoming more and more comprehensive, and application scenarios of the terminals are becoming more and more extensive in people's daily life and work. For example, in addition to regular call functions, the terminals can further be used for shooting pictures, browsing web pages, playing games, etc.

In general, when a user uses a terminal for content browsing, he/she often needs to control the interface jumping and switching by touch operations, which is a very cumbersome way to browse. In order to solve this problem, a timestamp or slider may be called out in the browsing interface, and the browsing interface can be switched or jumped by dragging the timestamp or slider.

Although browsing by timestamp or slider may solve the problem of cumbersome browsing operations to a certain extent, the call-out and dragging of timestamp or slider still make the browsing operations highly complex and cannot realize the requirements of automatic browsing, which greatly reduces the intelligence of the terminal. Methods for scrolling are disclosed in KR 2020 0048786 A, US 2013/016129 A1, CN 106 066 751 A, US 6 259 432 B1.

### SUMMARY OF THE DISCLOSURE

The invention is set out in the claims.
The present disclosure provides an automatic browsing method, a terminal, and a computer-readable storage medium.

The technical solutions of the present disclosure are implemented as follows.

In a first aspect, the present disclosure provides an automatic browsing method, including: in response to a first touch operation corresponding to a first region and a second region of a display, determining a touch parameter of the first touch operation; displaying a current interface and an associated interface of the current interface based on a preset direction and a preset speed in response to the touch parameter meeting a trigger condition; detecting a sliding operation in a third region and determining a sliding direction and a sliding distance of the sliding operation; wherein the third region is a region of the display including the first region and/or the second region; and adjusting the preset speed and preset direction according to the sliding direction and the sliding distance, and displaying the current interface and the associated interface based on an adjusted speed and an adjusted direction.

In a second aspect, the present disclosure provides a terminal, including a determination unit, a display unit, a detection unit, and an adjustment unit; wherein the determination unit is configured to, in response to a first touch operation corresponding to a first region and a second region of a display, determine a touch parameter of the first touch operation; the display unit is configured to display a current interface and an associated interface of the current interface based on a preset direction and a preset speed in response to the touch parameter meeting a trigger condition; the detection unit is configured to detect a sliding operation in a third region; wherein the third region is a region of the display including the first region and/or the second region; the determination unit is further configured to determine a sliding direction and a sliding distance of the sliding operation; the adjustment unit is configured to adjust the preset speed and preset direction according to the sliding direction and the sliding distance; the display unit is further configured to display the current interface and the associated interface based on an adjusted speed and an adjusted direction.

In a third aspect, the present disclosure provides a terminal, including a processor, a memory storing instructions executable by the processor, and a display; wherein the instructions are executed by the processor to implement the automatic browsing method as described in the first aspect.

In a fourth aspect, the present disclosure provides a computer-readable storage medium, storing a program; wherein the program is executable by a processor to implement the automatic browsing method as described in the first aspect.

### BRIEF DESCRIPTION OF THE DRAWINGS

FIG. 1A is one of schematic views I of a browsing method.
FIG. 1B is one of schematic views I of a browsing method.
FIG. 1C is one of schematic views I of a browsing method.
FIG. 2A is one of schematic views II of a browsing method.
FIG. 2B is one of schematic views II of a browsing method.
FIG. 3 is a schematic view of an implementation process of an automatic browsing method.
FIG. 4 is a schematic view of a first region and a second region.
FIG. 5 is another schematic view of a first region and a second region.
FIG. 6A is one of schematic views I of a current interface and an associated interface.
FIG. 6B is one of schematic views I of a current interface and an associated interface.
FIG. 7A is one of schematic views II of a current interface and an associated interface.
FIG. 7B is one of schematic views II of a current interface and an associated interface.
FIG. 8A is one of schematic views III of a current interface and an associated interface.
FIG. 8B is one of schematic views III of a current interface and an associated interface.
FIG. 8C is one of schematic views III of a current interface and an associated interface.
FIG. 9 is a schematic view of a display interface.
FIG. 10 is another schematic view of a display interface.
FIG. 11 is a schematic view of a browsing hot zone.
FIG. 12 is another schematic view of a browsing hot zone.
FIG. 13 is a schematic view of a third region.
FIG. 14 is another schematic view of a third region.
FIG. 15 is further another schematic view of a third region.
FIG. 16 is a schematic view of a sliding direction.
FIG. 17 is another schematic view of a sliding direction.
FIG. 18 is a further another schematic view of a display interface.
FIG. 19 is a further another schematic view of a display interface.
FIG. 20 is further another schematic view of a browsing hot zone.
FIG. 21 is further another schematic view of a browsing hot zone.
FIG. 22A is one of schematic views I of an automatic browsing method.
FIG. 22B is one of schematic views I of an automatic browsing method.
FIG. 22C is one of schematic views I of an automatic browsing method.
FIG. 22D is one of schematic views I of an automatic browsing method.
FIG. 22E is one of schematic views I of an automatic browsing method.
FIG. 22F is one of schematic views I of an automatic browsing method.
FIG. 22G is one of schematic views I of an automatic browsing method.
FIG. 23A is one of schematic views II of an automatic browsing method.
FIG. 23B is one of schematic views II of an automatic browsing method.
FIG. 23C is one of schematic views II of an automatic browsing method.
FIG. 23D is one of schematic views II of an automatic browsing method.
FIG. 23E is one of schematic views II of an automatic browsing method.
FIG. 23F is one of schematic views II of an automatic browsing method.
FIG. 23G is one of schematic views II of an automatic browsing method.
FIG. 23H is one of schematic views II of an automatic browsing method.
FIG. 23I is one of schematic views II of an automatic browsing method.
FIG. 24 is a schematic view of a composition structure of a terminal.
FIG. 25 is another schematic view of a composition structure of a terminal.

### DETAILED DESCRIPTION

The technical solutions in the embodiments of the present disclosure will be clearly and completely described below in conjunction with the accompanying drawings in the embodiments of the present disclosure. It will be understood that the specific embodiments described herein are intended only for the purpose of explaining the present disclosure, and not for limiting the present disclosure. It should also be noted that, for the purpose of description, the accompanying drawings show only elements that are relevant to the present disclosure.

With the continuous development of terminal technology, the functions of terminals are becoming more and more comprehensive, and application scenarios of the terminals are becoming more and more extensive in people's daily life and work. For example, in addition to regular call functions, the terminals can further be used for shooting pictures, browsing web pages, playing games, etc.

In general, when a user uses a terminal for content browsing, he/she often needs to control the interface jumping and switching by touch operations, which is a very cumbersome way to browse. In order to solve this problem, a timestamp or slider may be called out in the browsing interface, and the browsing interface can be switched or jumped by dragging the timestamp or slider.

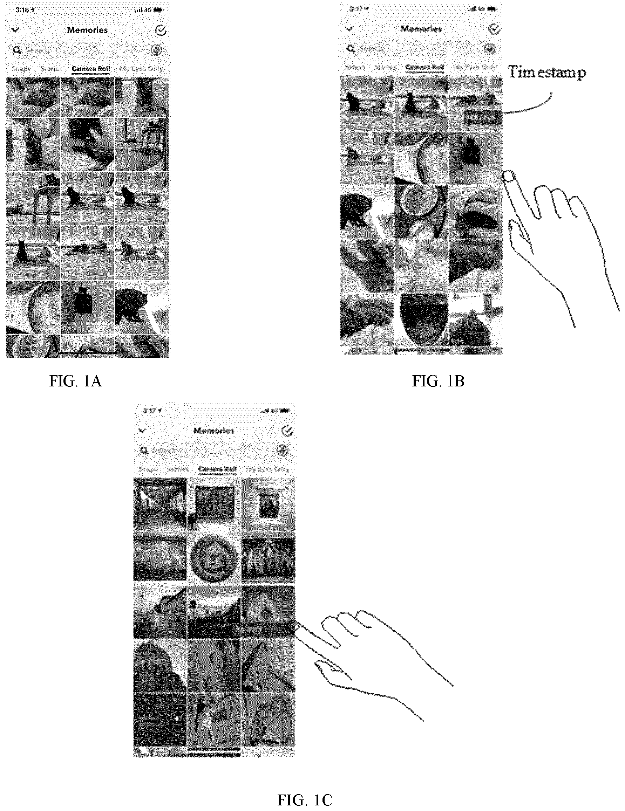

Exemplarily, FIGS. 1A-1C are schematic views I of a browsing method. The browsing method may be applied to a photo sharing application SnapChat. Specifically, as shown in FIG. 1A, there are multiple frames of images displayed in a display interface corresponding to SnapChat; as shown in FIG. 1B, after a sliding operation is received in the display interface corresponding to SnapChat, a slider on the right side of the display interface becomes a timestamp; as shown in FIG. 1C, when a dragging operation on the timestamp is detected, the terminal may quickly navigate up and down through the entire contents of SnapChat.

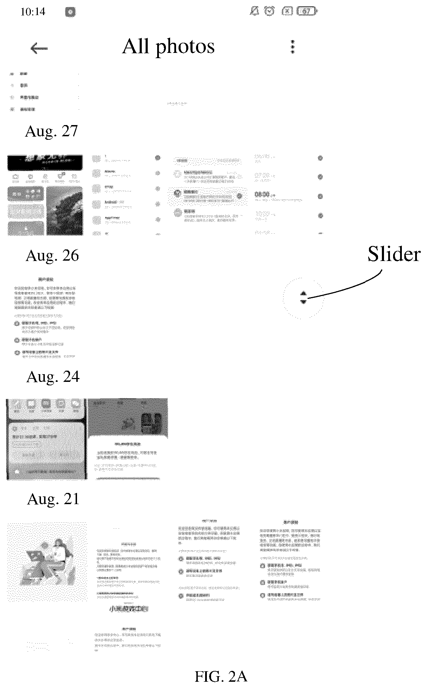

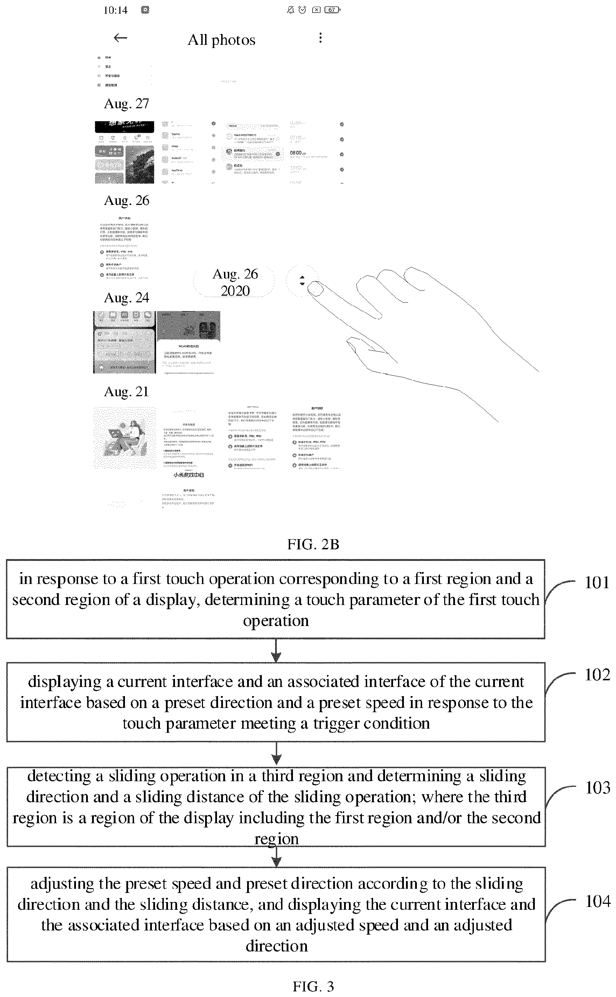

Exemplarily, FIGS. 2A-2B are schematic views II of a browsing method. The browsing method may be applied to a system album. Specifically, as shown in FIG. 2A, there is a slider resident on the right side of a display interface corresponding to the system album, as shown in FIG. 2B, when a dragging operation on the slider is detected, the terminal may quickly navigate up and down through the entire contents of the system album.

Although the method of browsing the display interface through the timestamp or slider can solve the problem of cumbersome browsing operations to a certain extent, the call-out and dragging of timestamp or slider still make the browsing operations highly complex and cannot realize the requirements of automatic browsing, which greatly reduces the intelligence of the terminal.

Understandably, the functions and performance of various devices of the terminal have also been improved to a greater extent, for example, the size of the display of the terminal has gradually increased, which makes the user usually hold the terminal with both hands when using the terminal in daily work and life. Therefore, the present disclosure hereby proposes an automatic browsing method in combination with the feature of two-handed grip.

In some embodiments, based on the automatic browsing method proposed in the present disclosure, the terminal may automatically display multiple associated interfaces by receiving a touch operation on the display and based on the touch operation, and the terminal may further adjust a browsing direction and speed in an automatic browsing mode by a detected sliding operation. In other words, the automatic browsing method proposed in the present disclosure can not only trigger the automatic browsing mode, but also precisely control the automatic browsing mode, which reduces the complexity of the browsing operation and meets personalized needs of the browsing mode on the basis of realizing automatic browsing, thereby greatly improving the intelligence of the terminal.

The technical solution in the present embodiments will be clearly and completely described below in conjunction with the accompanying drawings.

Embodiments of the present disclosure provide an automatic browsing method, and FIG. 3 is a schematic view of an implementation process of an automatic browsing method. In the embodiments of the present disclosure, the terminal automatic browsing method may include operations at blocks as illustrated herein.

At block 101: in response to a first touch operation corresponding to a first region and a second region of a display, determining a touch parameter of the first touch operation.

In the embodiments of the present disclosure, when the display of the terminal is displaying a current interface, a first touch operation may be detected in the first region and the second region of the display, and the touch parameter of the first touch operation may be determined in response to the first touch operation. The touch parameter of the first touch operation may include at least one of: touch time, touch pressure, touch direction, touch distance, etc.

It is understood that in the embodiments of the present disclosure, the terminal may display the current interface on the entire display when displaying the current interface.

Further, in the embodiments of the present disclosure, the current interface may be a display interface of any application of the terminal, or a system interface of the terminal, or an image or a video being played by the terminal. That is, in the present disclosure, the first display interface may be any interface that the terminal can display, and the present embodiment does not limit in this regard.

It is understood that in the present disclosure, the current interface shows part of content of any application, or system, or image or video in the terminal. For example, after the terminal opens a document, part of text information in the document may be displayed in the current interface.

It should be noted that in the embodiments of the present disclosure, the terminal may be any terminal with communication and storage functions, such as: tablet PC, mobile phone, e-reader, remote control, personal computer (PC), notebook computer, in-vehicle device, network television, wearable device, personal digital assistant (PDA), portable media player (PMP), navigation device, etc.

In some embodiments, the terminal may be arranged with a display, and exemplarily, the terminal may be a large-screen terminal or a full-screen terminal.

Further, in the embodiments of the present disclosure, the terminal may detect a first touch operation in the first region and the second region of the display, and the first region and the second region may be disposed on the left side and the right side in the display, respectively.

In some embodiments, the first region and the second region may be the left side and the right side of the display of the terminal, that is, the first touch operation may be detected on the left and right sides of the display of the terminal. For example, when the user holds the terminal with both hands, the user can perform a touch operation on the left and right sides of the display of the terminal such that the terminal detects the first touch operation.

It is understood that in the embodiments of the present disclosure, the left and right sides of the display are determined based on a placement state of the terminal, and the left and right sides of the display of the terminal are not the same for different placement states. Specifically, the placement state of the terminal may be a landscape screen state or a portrait screen state, and the left and right sides of the display in the landscape screen state are different from the left and right sides of the display in the portrait screen state. For example, in the landscape screen state, the left and right sides of the display are two narrow sides of the terminal, and accordingly, in the portrait screen state, the left and right sides of the display are two wide sides of the terminal.

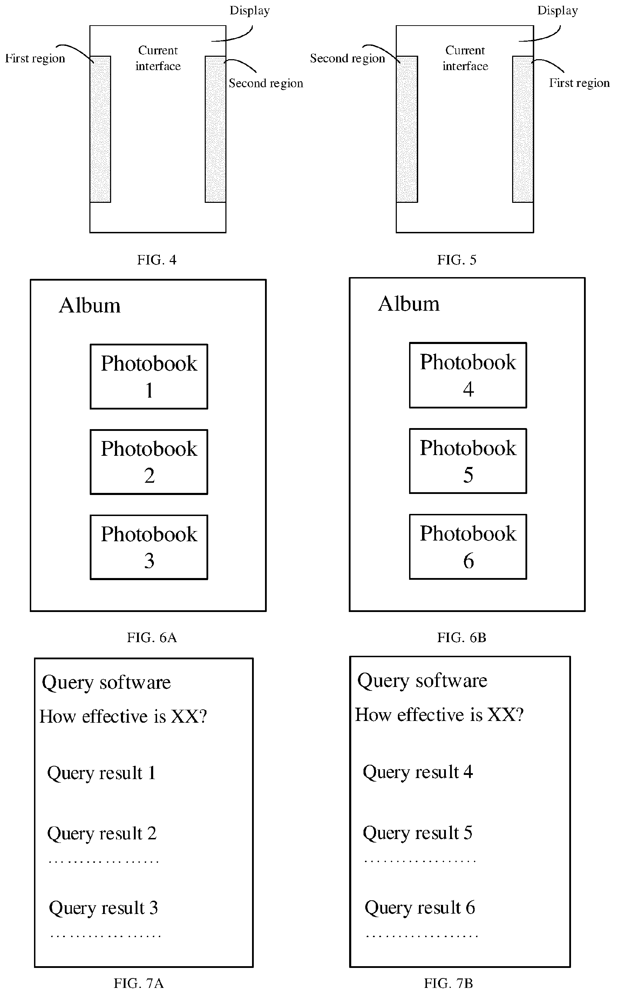

Exemplarily, in the embodiments of the present disclosure, FIG. 4 is a schematic view of a first region and a second region. As shown in FIG. 4, when the placement state of the terminal is a portrait screen state, the first region may be on the left side of the display, and the second region may on the right side of the display. The terminal may detect the first touch operation on the left side and the right side of the display. For example, while holding the terminal with both hands, the user may touch the left and right sides of the display by the left and right thumbs, respectively, such that the terminal receives the first touch operation in the first region on the left side and the second region on the right side of the display.

Exemplarily, in the embodiments of the present disclosure, FIG. 5 is another schematic view of a first region and a second region. As shown in FIG. 5, the first region may be on the right side of the display and the second region may on the left side of the display. The terminal may detect the first touch operation on the left side and the right side of the display. For example, while holding the terminal with both hands, the user may touch the left and right sides of the display by the left and right thumbs, respectively, such that the terminal receives the first touch operation in the second region on the left side and the first region on the right side of the display.

Further, in the embodiments of the present disclosure, the terminal may determine the touch parameter of the first touch operation after the first touch operation is detected in the first region and the second region.

It is understood that in the embodiments of the present disclosure, the touch parameter of the first touch operation may include a touch time and a touch pressure.

In some embodiments, the terminal may determine the touch time and touch pressure of the first touch operation such that the terminal may further determine whether an automatic browsing mode is required to be turned on based on the touch pressure and/or touch time.

At block 102: displaying a current interface and an associated interface of the current interface based on a preset direction and a preset speed in response to the touch parameter meeting a trigger condition.

In the embodiments of the present disclosure, after the terminal detects the first touch operation in the first region and the second region of the display and determines the touch parameter of the first touch operation, when the touch parameter meets the trigger condition of the automatic browsing mode, the terminal may display the current interface in the display based on the preset direction and the preset speed, i.e., the terminal turns on the automatic browsing mode based on the first touch operation.

It should be noted that in the embodiments of the present disclosure, when the touch parameter of the first touch operation meets the trigger condition of the automatic browsing mode, the terminal may display the current interface in the display based on the preset direction and preset speed and call out a browsing hot zone in the display, and the preset direction and preset speed of the automatic browsing mode may be displayed through the browsing hot zone.

Further, in the embodiments of the present disclosure, after determining the touch parameter of the first touch operation, the terminal may determine whether the touch parameter meet the trigger condition of the automatic browsing mode to determine whether to turn on the automatic browsing mode. Specifically, when the touch parameter meets the trigger condition of the automatic browsing mode, the terminal may choose to turn on the automatic browsing mode, and when the touch parameter does not meet the trigger condition of the automatic browsing mode, the terminal may consider the first touch operation to be a mis-operation, and therefore will not turn on the automatic browsing mode.

Exemplary, in the embodiments of the present disclosure, the touch parameter of the first touch operation may include at least one of the following parameters: touch time, touch pressure, touch direction, and touch distance. Accordingly, when determining whether the touch parameter meets the trigger condition of the automatic browsing mode, the trigger condition may include at least one of the following: the touch time being greater than a preset time threshold, the touch pressure being greater than a preset pressure threshold, the touch direction being a preset trigger direction, the touch distance being greater than a preset distance threshold. That is, as long as the touch parameter meets at least one of the above conditions, the terminal may determine that the touch parameter meets the trigger condition of the automatic browsing mode.

Exemplary, in the present embodiments, when the touch parameter includes touch time and touch pressure, the terminal may determine that the touch parameter meets the trigger condition of the automatic browsing mode only when the touch time is greater than a preset time threshold. That is, as long as the touch time of the first touch operation is greater than a time threshold, it may be considered necessary to turn on the automatic browsing mode.

Exemplarily, in the present embodiments, when the touch parameter includes touch time, touch pressure, and touch distance, the terminal may determine that the touch parameter meets the trigger condition of the automatic browsing mode only when the touch pressure is greater than a preset pressure threshold and the touch distance is greater than a preset distance threshold. That is, as long as the touch pressure and the touch distance of the first touch operation are greater than respective preset thresholds, it may be considered necessary to turn on the automatic browsing mode.

Exemplarily, in the embodiments of the present disclosure, the first touch operation is detected in the first region and the second region, and when the touch parameter includes touch direction and touch distance, the terminal may determine that the touch parameter meets the trigger condition of the automatic browsing mode only when the touch direction is a preset trigger direction and the touch distance is greater than a preset distance threshold. That is, only when the touch direction and touch distance of the first touch operation meets the trigger condition, it may be considered necessary to turn on the automatic browsing mode.

Further, in the embodiments of the present disclosure, the terminal may display the current interface and the associated interface of the current interface in the display based on the preset direction and the preset speed after the automatic browsing mode is turned on.

Therefore, in the embodiments of the present disclosure, the terminal may detect the first touch operation in the first region and the second region to turn on the automatic browsing mode, and after the automatic browsing mode is turned on, the terminal may automatically scroll through multiple interfaces to achieve the requirements for automatic browsing.

It should be noted that in the present disclosure, the associated interface of the current interface is at least one interface belonging to the same application, system, image or video as the current interface, i.e., the associated interface can also be at least one arbitrary interface related to the current interface that the terminal can display.

It is understood that in the present disclosure, the current interface and the associated interface may have partly the same interface content, but the current interface and the associated interface are not identical.

In some embodiments, other parts of the content of any application, or system, or image video, etc. in the terminal are displayed in the associated interface of the current interface. For example, after the terminal opens a document, some text information in the document may be displayed in the current interface and other parts of the text information in the document may be displayed in the relevant interface.

Exemplarily, in the present disclosure, FIGS. 6A-6B are schematic views I of a current interface and an associated interface. As shown in FIG. 6A, after the terminal opens an album, the current interface displayed by the terminal in the display may be an interface including a photobook 1, a photobook 2, and a photobook 3; as shown in FIG. 6B, the associated interface related to the current interface may be another interface including a photobook 4, a photobook 5, and a photobook 6.

Exemplarily, in the present disclosure, FIGS. 7A-7B are schematic views II of a current interface and an associated interface. As shown in FIG. 7A, after the terminal opens a query software, the current interface displayed by the terminal in the display may be an interface including a query question (how effective is the use of XX?), query result 1, query result 2, and query result 3; as shown in FIG. 7B, the associated interface related to the current interface may be another interface including the query question (how effective is the use of XX?), query result 4, query result 5, and query result 6.

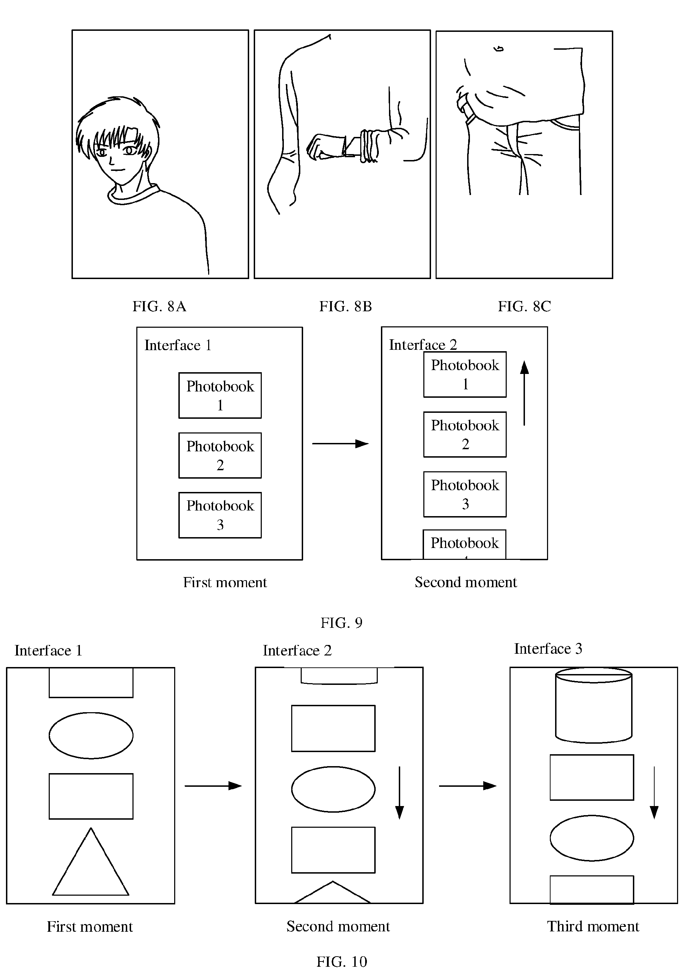

Exemplarily, in the present disclosure, FIGS. 8A-8C are schematic views III of a current interface and an associated interface. As shown in FIG. 8A, when the terminal is browsing a frame image, the current interface displayed by the terminal in the display may be an interface including a part of the frame image, and the associated interface related to the current interface as shown in FIGS. 8B and 8C may be another two interfaces including other parts of the frame image.

Further, in the embodiments of the present disclosure, the preset direction and preset speed may be configured to characterize the direction and speed of displaying in the automatic browsing mode.

In some embodiments, the preset direction may be divided into upward browsing and downward browsing, the preset speed may be divided into at least two different scrolling speeds of the interface, for example, the preset speed may include low speed, medium speed, and high speed.

It is understood that in the embodiments of the present disclosure, the preset direction and preset speed may be a fixed browsing direction and a fixed browsing speed preset by the terminal. For example, the preset direction and preset speed may be a combination of "up browsing + low speed", or "down browsing + medium speed", without limitation herein.

Exemplarily, in the embodiments of the present disclosure, FIG. 9 is a schematic view of a display interface. As shown in FIG. 9, the terminal may display the current interface and the associated interface of the current interface on the display according to the preset direction and preset speed after the automatic browsing mode is turned on. The preset direction and preset speed include the upward-browsing direction and the low-speed speed, respectively. Specifically, when the terminal displays interface 1 and interface 2 related to interface 1 according to the combination of "upward browsing + low speed", the terminal displays interface 1 at a first moment and interface 2 at a second moment.

Exemplarily, in the embodiments of the present disclosure, FIG. 10 is another schematic view of a display interface. As shown in FIG. 10, the terminal may display the current interface and the associated interface of the current interface on the display according to the preset direction and preset speed after the automatic browsing mode is turned on. The preset direction and preset speed include the downward-browsing direction and the high-speed speed, respectively. Specifically, when the terminal displays interface 1, interface 2, and interface 3 related to interface 1 according to the combination of "downward browsing + high speed", the terminal displays interface 1 at a first moment, interface 2 at a second moment, and interface 3 at a third moment.

Further, in the embodiments of the present disclosure, the terminal may further call out a browsing hot zone when the automatic browsing mode is turned on, and the preset direction and the preset speed are displayed by the browsing hot zone. The browsing hot zone may be a region in the display and hovering above any interface.

It should be noted that in the embodiment of the present disclosure, the terminal can use set icons to represent the preset speed and preset direction when displaying the preset direction and preset speed through the browsing hot zone, or it can directly display the preset speed and preset direction through text expression, and the present disclosure is not specifically limited.

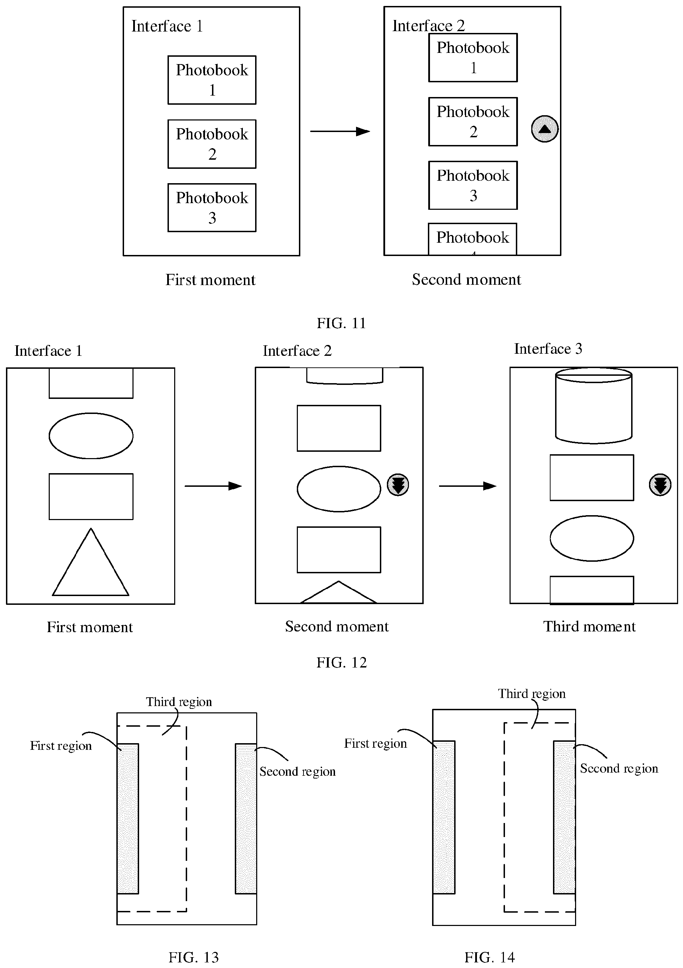

Exemplarily, in the present disclosure, based on FIG. 9, FIG. 11 is a schematic view of a browsing hot zone. As shown in FIG. 11, when the terminal displays interface 1 and interface 2 according to "upward browsing + low speed", the terminal may indicate upward browsing by the direction of arrows and low speed by the number of the arrows.

Exemplarily, in the present disclosure, based on FIG. 10, FIG. 12 is another schematic view of a browsing hot zone. As shown in FIG. 12, when the terminal displays interface 1, interface 2, and interface 3 according to "downward browsing + high speed", the terminal may indicate downward browsing by the direction of arrows, and indicate high speed by the number of the arrows.

Further, in the embodiments of the present disclosure, the terminal may further call out a reminder hot zone in the first region and the second region respectively. The reminder hot zone is configured to characterize the activation of the automatic browsing mode.

It is noted that in the embodiments of the present disclosure, after turning on the automatic browsing mode, the terminal may choose to call out the reminder hot zone in only the first region or the second region, or choose to call out the reminder hot zone in both the first region and the second region.

Exemplarily, in the present disclosure, the terminal may display two black edges in the first region and the second region in the display after the automatic browsing mode is turned on, for indicating that the terminal has entered the automatic browsing mode.

It should be noted that in the present disclosure, in the automatic browsing mode, the preset direction may be left browsing or right browsing, without limitation herein.

At block 103: detecting a sliding operation in a third region and determining a sliding direction and a sliding distance of the sliding operation, where the third region is a region of the display including the first region and/or the second region.

In the embodiments of the present disclosure, the terminal may further detect the sliding operation in the third region of the display after the automatic browsing mode is turned on, and determine the sliding direction and sliding distance of the sliding operation.

It should be noted that in the embodiments of the present disclosure, the third region may be a region in the display of the terminal that includes the first region and/or the second region.

That is, in the present disclosure, the third region may be a part of the display covering the first region or the second region, or a part of the display covering both the first region and the second region, or the entire display.

Exemplarily, in the embodiments of the present disclosure, FIG. 13 is a schematic view of a third region. As shown in FIG. 13, the third region may be on the left side in the display, and the third region may include the first region on the left side in the display.

Exemplarily, in the embodiments of the present disclosure, FIG. 14 is another schematic view of a third region. As shown in FIG. 14, the third region may be on the right side in the display, and the third region may include the second region on the right side in the display.

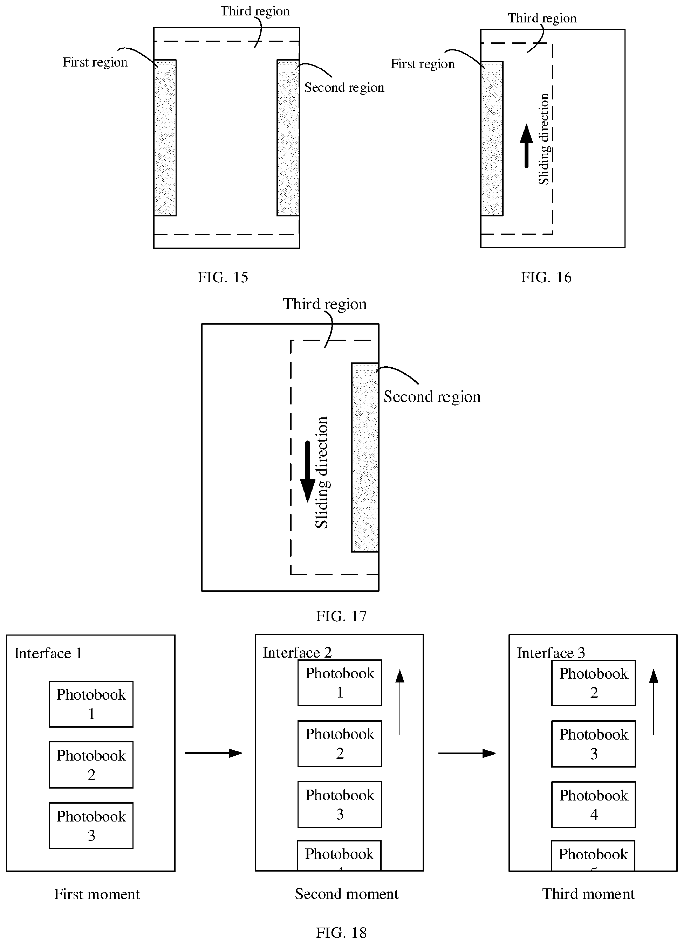

Exemplarily, in the embodiments of the present disclosure, FIG. 15 is further another schematic view of a third region. As shown in FIG. 15, the third region may include the first region on the left side in the display and the second region on the right side in the display.

Further, in the embodiments of the present disclosure, in the automatic browsing mode, the terminal may adjust the preset browsing parameters through the received sliding operation, such that the sliding direction and the sliding distance may be configured to adjust the preset direction and the preset speed in the automatic browsing mode.

In some embodiments of the present disclosure, the sliding direction may include sliding upward and sliding downward.

Exemplarily, in the embodiments of the present disclosure, FIG. 16 is a schematic view of a sliding direction. As shown in FIG. 16, the third region is on the left side of the display of the terminal, and the sliding direction of the sliding operation detected by the terminal in the third region is from bottom to top, i.e., the sliding direction is upward sliding.

Exemplarily, in the embodiments of the present disclosure, FIG. 17 is another schematic view of a sliding direction. As shown in FIG. 17, the third region is on the right side of the display of the terminal, and the sliding direction of the sliding operation detected by the terminal in the third region is from top to bottom, i.e., the sliding direction is downward sliding.

It should be noted that in the embodiments of the present disclosure, the sliding direction may be upward and downward sliding along the vertical direction, or upward and downward sliding within a certain angle range based on the vertical line, thereby enabling the terminal to determine the sliding direction of the sliding operation more accurately.

Further, in the embodiments of the present disclosure, the sliding direction may adjust the preset direction and preset speed in the automatic browsing mode, and the sliding distance may adjust only the preset speed in the automatic browsing mode. Specifically, in the present disclosure, the greater the sliding distance of the sliding operation, the greater the adjustment of the preset speed.

It should be noted that in the present disclosure, the sliding operation detected by the terminal in the automatic browsing mode may be leftward sliding or rightward sliding, without limitation herein.

At block 104: adjusting the preset speed and preset direction according to the sliding direction and the sliding distance, and displaying the current interface and the associated interface based on an adjusted speed and an adjusted direction.

In the embodiments of the present disclosure, after the terminal detects the sliding operation in the third region and determines the sliding direction and sliding distance of the sliding operation, the terminal may adjust the preset direction and preset speed according to the sliding direction and sliding distance to determine the adjusted direction and adjusted speed, and display the current interface and the associated interface of the current interface based on the adjusted direction and adjusted speed.

It should be noted that in the embodiments of the present disclosure, after the adjustment of the preset direction and the preset speed is completed, the terminal may further display the adjusted direction and the adjusted speed through the called out browsing hot zone while displaying the current interface in the display based on the adjusted direction and the adjusted speed.

Further, in the embodiments of the present disclosure, when the terminal adjusts the preset direction and preset speed through the sliding direction and sliding distance of the sliding operation, the terminal may directly choose to increase or decrease the preset speed by the sliding direction of the sliding operation, or the terminal may first compare the sliding direction with the preset direction and then increase or decrease the preset speed according to a comparison result.

Exemplarily, in the present disclosure, when the terminal adjusts the preset speed and preset direction according to the sliding direction and sliding distance, when the sliding direction is upward sliding, the terminal may increase the preset speed according to the sliding distance to obtain the adjusted speed. That is, when the terminal detects the sliding operation of sliding upward in the third region, the preset speed may be increased according to the sliding distance.

Exemplarily, in the present disclosure, when the terminal adjusts the preset speed and preset direction according to the sliding direction and sliding distance, when the sliding direction is downward sliding, the terminal may reduce the preset speed according to the sliding distance to obtain the adjusted speed. That is, when the terminal detects the sliding operation of sliding downward in the third region, the preset speed may be reduced according to the sliding distance.

Exemplarily, in the present disclosure, when the terminal adjusts the preset speed and preset direction according to the sliding direction and sliding distance, when the preset direction and sliding direction are the same, the terminal may increase the preset speed according to the sliding distance to obtain the adjusted speed. That is, when the terminal detects in the third region that the direction of the sliding operation is the same as the browsing direction in the automatic browsing mode, the preset speed may be increased according to the sliding distance.

Exemplarily, in the present disclosure, when the terminal adjusts the preset speed and preset direction according to the sliding direction and sliding distance, when the preset direction and the sliding direction are different, the terminal may reduce the preset speed according to the sliding distance and obtain the adjusted speed. That is, when the terminal detects in the third region that the direction of the sliding operation is opposite to the browsing direction in the automatic browsing mode, the preset speed may be reduced according to the sliding distance.

Further, in the embodiments of the present disclosure, when the terminal reduces the preset speed through the sliding direction and sliding distance of the sliding operation, in a case where the preset speed is reduced to a negative value, the terminal may directly adjust the preset direction to an opposite browsing direction to obtain the adjusted direction.

Exemplarily, in the present disclosure, when the preset direction is upward browsing, after reducing the preset speed to less than 0, the terminal may directly adjust the preset direction to downward browsing to obtain the adjusted direction.

Exemplarily, in the present disclosure, when the preset direction is downward browsing, after reducing the preset speed to less than 0, the terminal may directly adjust the preset direction to upward browsing to obtain the adjusted direction.

Further, in the embodiments of the present disclosure, when adjusting the preset speed according to the sliding distance of the sliding operation, the terminal may first determine an adjustment ratio according to the sliding distance, and adjust the preset speed according to the ratio; alternatively, the terminal may first determine an adjustment value according to the sliding distance, and adjust the preset speed according to the value.

Exemplarily, in the present disclosure, the terminal may first query a mapping table between the preset distance and the adjustment ratio to obtain the adjustment ratio corresponding to the sliding distance, and increase or decrease the preset speed according to the adjustment ratio. For example, when the sliding distance is 1cm and the adjustment ratio obtained from the query is 10%, the terminal may increase or decrease the preset speed by 10%.

Exemplarily, in the present disclosure, the terminal may first query a mapping table between the preset distance and the adjustment value to obtain the adjustment value corresponding to the sliding distance, and increase or decrease the preset speed according to the adjustment value. For example, when the sliding distance is 1.5 cm and the adjustment value obtained from the query is 2 mm/s, the terminal may increase or decrease the preset speed by 2 mm/s.

It can be understood that in the embodiments of the present disclosure, the terminal may use a variety of other ways to adjust the preset direction and preset speed based on the sliding distance and sliding direction of the sliding operation, and the present disclosure does not limit in this regard.

Further, in the embodiments of the present disclosure, after the terminal completes the adjustment of the preset direction and preset speed in the automatic browsing mode according to the detected sliding operation, the terminal may continue to display the current interface and the associated interface of the current interface on the display according to the adjusted direction and the adjusted speed.

It should be noted that in the embodiments of the present disclosure, the adjusted direction may be the same as the preset direction or may be different from the preset direction. Specifically, the adjusted direction may be divided into upward browsing and downward browsing. Accordingly, the adjusted speed may be the same as the preset speed or different from the preset speed. Specifically, the adjusted speed may be divided into at least two different scrolling speeds of the interface, for example, the adjusted speed may include low speed, medium speed, and high speed.

Exemplarily, in the present disclosure, the adjusted direction and adjusted speed may be a combination of "upward browsing + low speed" or "downward browsing + high speed", without any specific limitation in the present disclosure.

Exemplarily, in the embodiments of the present disclosure, based on the FIG. 9, FIG. 18 is a further another schematic view of a display interface. As shown in FIG. 18, after finishing adjusting the preset direction and preset speed in the automatic browsing mode according to the detected sliding operation, the terminal may display the current interface and the associated interface of the current interface on the display according to the adjusted direction and adjusted speed. The adjusted direction is the same as the preset direction, which is also the browsing direction of upward browsing, and the adjusted speed is increased from the preset speed of low speed to medium speed. Specifically, before the adjustment, the terminal displays interface 1 and interface 2 related to interface 1 according to the combination of "upward browsing + low speed", and after the adjustment, the terminal displays interface 2 and interface 3 related to interface 1 according to the combination of "upward browsing + medium speed".

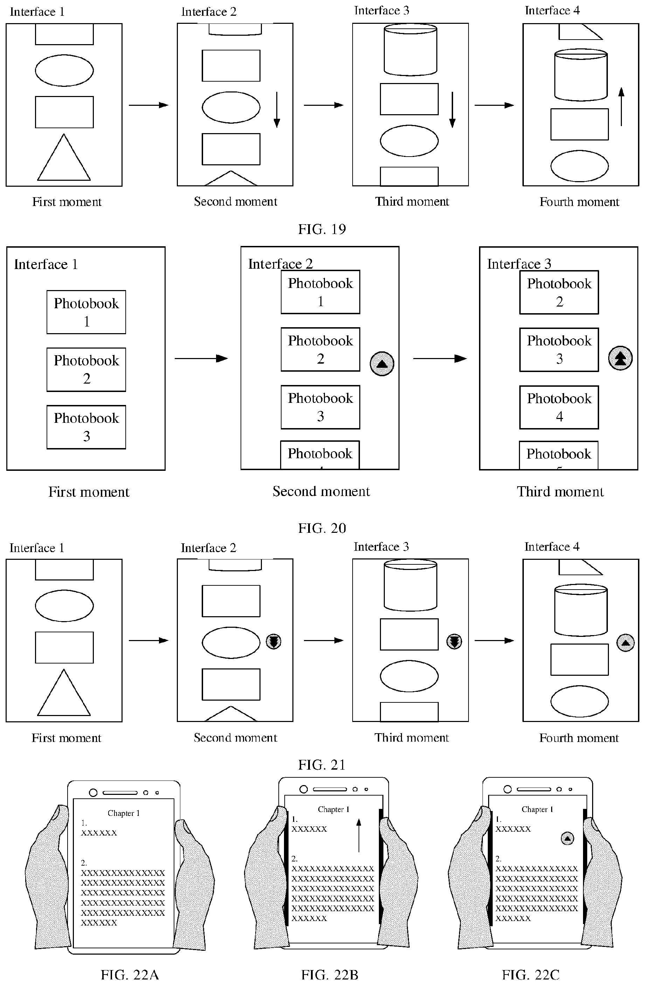

Exemplarily, in the embodiments of the present disclosure, based on the FIG. 10, FIG. 19 is a further another schematic view of a display interface. As shown in FIG. 19, after finishing adjusting the preset direction and preset speed in the automatic browsing mode according to the detected sliding operation, the terminal may display the current interface and the associated interface of the current interface on the display according to the adjusted direction and adjusted speed. The adjusted direction is opposite to the preset direction, from downward browsing to upward browsing, and the adjusted speed is reduced from the preset speed of high speed to low speed. Specifically, before the adjustment, the terminal displays interface 1 and interfaces 2 and 3 related to interface 1 according to the combination of "downward browsing + high speed", and after the adjustment, the terminal displays interfaces 3 and 4 related to interface 1 according to the combination of "upward browsing + low speed".

Therefore, in the embodiments of the present disclosure, the terminal may not only detect the first touch operation in the first region and the second region to turn on the automatic browsing mode, but also control the browsing direction and browsing speed in the automatic browsing mode by detecting the sliding operation after the automatic browsing mode is turned on, which is more intelligent.

Further, in the embodiments of the present disclosure, the terminal may further display the adjusted direction and adjusted speed through the browsing hot zone after completing the adjustment of the preset direction and preset speed in the automatic browsing mode according to the detected sliding operation.

It can be understood that in the embodiments of the present disclosure, after the terminal completes the adjustment of the preset direction and the preset speed, when the adjusted direction or the adjusted speed is changed, the content displayed by the terminal through the browsing hot zone may also be changed accordingly.

Exemplarily, in the present disclosure, based on FIG. 11, FIG. 20 is further another schematic view of a browsing hot zone. As shown in FIG. 20, when the terminal displays interface 2 and interface 3 related to interface 1 according to the combination of "upward browsing + medium speed", the terminal may indicate upward browsing by the direction of the arrows and medium speed by the number of the arrows.

In the present disclosure, based on FIG. 12, FIG. 21 is further another schematic view of a browsing hot zone. As shown in FIG. 21, when the terminal displays interface 3 and interface 4 related to interface 1 according to the combination of "upward browsing + low speed", the terminal may indicate upward browsing by the direction of the arrows and low speed by the number of the arrows.

Therefore, in the present disclosure, the automatic browsing method proposed in the above steps 101 to 104 enables the terminal to make full use of the user's dual-handheld posture when using a large-screen terminal to trigger the automatic browsing mode and realize automatic browsing of the display interface, while the terminal can continue to precisely control the direction and speed of automatic browsing by detecting the trigger operation, namely, the user's finger sliding up and down. In other words, in the present disclosure, the terminal may trigger the automatic browsing mode when detecting the user's hands long-pressing the edge of the screen, and adjust the direction and speed of automatic browsing in real time by calculating the sliding distance when the sliding operation is detected, so as to achieve presenting the content in the best way according to the needs of usage scenarios.

Further, in the present disclosure, after the automatic browsing mode is turned on, the automatic browsing mode may not be turned off even if the terminal detects that the user no longer holds it with both hands, and the automatic browsing method in the present disclosure may create a browsing experience that does not require holding the terminal and can be used in more scenarios.

In summary, an automatic browsing method proposed in embodiments of the present disclosure is performed by a terminal and includes: in response to a first touch operation corresponding to a first region and a second region of a display, determining a touch parameter of the first touch operation, displaying a current interface and an associated interface of the current interface based on a preset direction and a preset speed in response to the touch parameter meeting a trigger condition; detecting a sliding operation in a third region and determining a sliding direction and a sliding distance of the sliding operation; where the third region is a region of the display including the first region and/or the second region; and adjusting the preset speed and preset direction according to the sliding direction and the sliding distance, and displaying the current interface and the associated interface based on an adjusted speed and an adjusted direction. In this way, the automatic browsing method proposed in the present disclosure allows the terminal to automatically display multiple associated interfaces by receiving a touch operation at the display and based on the touch operation. In addition, the terminal may further adjust the browsing direction and speed in the automatic browsing mode through the detected sliding operation. That is, the automatic browsing method proposed in the present disclosure not only triggers the automatic browsing mode, but also provides precise control of the automatic browsing mode, which reduces the complexity of the browsing operation and meets the personalized needs of the browsing mode on the basis of realizing automatic browsing, thereby greatly improving the intelligence of the terminal.

Based on the above embodiments, in further embodiments of the present disclosure, when the touch parameter meets the trigger condition, the current interface and the associated interface of the current interface are displayed based on the preset direction and the preset speed, and a browsing hot zone is called out; after the preset direction and the preset speed are displayed through the browsing hot zone, the terminal automatic browsing method may further include the following steps: after the first touch operation is finished, continuing to display the current interface and the associated interface based on the preset direction and the preset speed, and displaying the preset direction and the preset speed through the browsing hot zone.

That is, in the embodiments of the present disclosure, after turning on the automatic browsing mode by detecting the first touch operation in the first region and the second region, the terminal may display the current interface and the associated interface of the current interface on the display based on the preset direction and the preset speed; while displaying the preset direction and the preset speed through the browsing hot zone, the terminal may further detect an end of the first touch operation through the first region and the second region; after detecting the end of the first touch operation, the terminal may further continue to display the current interface and the associated interface of the current interface on the display based on the preset direction and the preset speed while displaying the preset direction and the preset speed through the browsing hot zone.

Further, in the embodiments of the present disclosure, after the automatic browsing mode is turned on, when the terminal detects a hover operation in the first region and the second region, the terminal may consider that the first touch operation has ended.

It is understood that in the present disclosure, after the terminal turns on the automatic browsing mode through the first touch operation, even if the first touch operation has ended, the terminal does not turn off the automatic browsing mode, but continues to display the current interface and the associated interface of the current interface on the display according to the preset direction and the preset speed, while displaying the preset direction and the preset speed through the browsing hot zone.

In other words, in the embodiments of the present disclosure, the user touches the first region and the second region in the display of the terminal, causing the terminal to turn on the automatic browsing mode and display multiple interfaces according to the preset direction and preset speed; once the automatic browsing mode is turned on, the user does not need to keep touching the first region and the second region, and even if the user no longer touches the first region and the second region, the automatic browsing mode is not automatically turned off.

That is, the terminal may turn on the automatic browsing mode by detecting the first touch operation, but not turn off the automatic browsing mode in response to the end of the first touch operation.

Further, in the embodiments of the present disclosure, after the terminal adjusts the preset speed and preset direction according to the sliding direction and sliding distance, displays the associated interface on the display based on the adjusted speed and adjusted direction, and displays the adjusted direction and adjusted speed through the browsing hot zone, the automatic browsing method may further include the following steps: after the sliding operation ends, continuing to display the associated interface on the display based on the adjusted direction and adjusted speed, and displaying the adjusted direction and adjusted speed through the browsing hot zone.

That is, in the embodiments of the present disclosure, after the terminal adjusts the preset speed and preset direction based on the sliding direction and sliding distance, displays the associated interface on the display based on the adjusted speed and adjusted direction, and displays the adjusted direction and adjusted speed through the browsing hot zone, the terminal may further detect the end of the sliding operation through the third region; after detecting the end of the sliding operation, the terminal may continue to display the associated interface on the display based on the adjusted speed and adjusted direction, and display the adjusted direction and adjusted speed through the browsing hot zone.

Further, in the embodiments of the present disclosure, after the automatic browsing mode is turned on and the preset direction and the preset speed are adjusted, when the terminal detects a hover operation in the third region, the terminal may consider that the first touch operation and the sliding operation have ended.

It can be understood that in the present disclosure, after the terminal adjusts the direction and speed of the automatic browsing mode through the sliding operation, even if the sliding operation has ended, the terminal does not turn off the automatic browsing mode, but continues to display the associated interface on the display according to the adjusted direction and adjusted speed, while displaying the adjusted direction and adjusted speed through the browsing hot zone.

In other words, in the embodiments of the present disclosure, the user touches the first region and the second region in the display of the terminal, causing the terminal to turn on the automatic browsing mode, and then the user performs the sliding operation in the third region in the display to display multiple interfaces according to the adjusted direction and adjusted speed; once the speed and direction of the automatic browsing mode have been adjusted, the user does not need to keep performing the sliding operation in the third region; the automatic browsing mode will not be turned off automatically and the adjusted direction and speed will not be changed, even if the user no longer performs the sliding operation.

Therefore, the terminal may turn on the automatic browsing mode by detecting the first touch operation, and adjust the direction and speed of the automatic browsing mode through the sliding operation, but will not turn off the automatic browsing mode in response to the end of the sliding operation.

Further, in the embodiments of the present disclosure, after the terminal turns on the automatic browsing mode, i.e., after step 102 or step 104, the automatic browsing method may further include the following steps.

Step 105: in response to detecting a second touch operation on the display, determining a target interface that is currently displayed.

Step 106: in response to the second touch operation meeting a preset turn-off condition, stopping displaying based on the preset direction and the preset speed, and statically displaying the target interface.

Step 107: in response the second touch operation meeting a preset turn-off condition, stopping displaying based on the adjusted direction and the adjusted speed, and statically displaying the target interface.

In the embodiments of the present disclosure, after the automatic browsing mode is turned on, i.e., after the terminal displays the current interface and the associated interface on the display based on the preset direction and the preset speed, or, after the terminal displays the current interface and the associated interface on the display based on the adjusted direction and the adjusted speed, the terminal may further detect the second touch operation on the display, determine the target interface being displayed by the display in response to the second touch operation, and turn off the automatic browsing mode after determining that the second touch operation meets the preset turn-off condition, stopping displaying based on the preset direction and the preset speed or stopping displaying based on the adjusted direction and the adjusted speed, and only statically displaying the target interface.

It is to be noted that in the embodiments of the present disclosure, the target interface may be an interface of the terminal in the automatic browsing mode and being currently displayed. The target interface may be any one of the current interface and the associated interface of the current interface, and the target interface may be an interface including partial content of any two interfaces of the current interface and the associated interface.

It is understood that in the embodiments of the present disclosure, the second touch operation may be any touch screen operation such as a click operation, a press operation, etc., and the second touch operation is configured to turn off the automatic browsing mode.

Further, in the embodiments of the present disclosure, after detecting the second touch operation on the display, the terminal may first determine a touch parameter of the second touch operation and determine whether the preset turn-off condition is met based on the touch parameter of the second touch operation. When the preset turn-off condition is met, the terminal may turn off the automatic browsing mode in response to the second touch operation to, i.e., stopping displaying based on the preset direction and the preset speed or stopping displaying based on the adjusted direction and the adjusted speed, and only displaying the target interface.

In other words, in the embodiments of the present disclosure, after the automatic browsing mode is turned on, the terminal may obtain an instruction to turn off the automatic browsing mode by receiving a second touch operation on the display, i.e., the terminal may directly turn off the automatic browsing mode once a touch operation is detected again in the state of the automatic browsing mode.

It is understood that in the embodiments of the present disclosure, after the terminal turns off the automatic browsing mode in response to the second touch operation, the terminal no longer performs displaying the multiple interfaces, but reverts to static display of a single interface.

Further, in the embodiments of the present disclosure, after the terminal detects the second touch operation on the display, the automatic browsing method may further include the following steps.

Step 108: in response to the second touch operation meeting a preset turn-off condition, closing the browsing hot zone.

In the embodiments of the present disclosure, after detecting the second touch operation on the display and after determining that the second touch operation meets the preset turn-off condition, the terminal may further close the browsing hot zone in response to the second touch operation while closing the automatic browsing mode.

In other words, in the embodiments of the present disclosure, after the automatic browsing mode is turned on, the terminal may display the direction and speed of the automatic browsing through the called out browsing hot zone, such that the specific browsing parameters in the automatic browsing mode may be displayed more intuitively, and since the terminal obtains the instruction to turn off the automatic browsing mode through the received second touch operation, the terminal may turn off the automatic browsing mode along with the browsing hot zone.

By virtue of the automatic browsing method proposed in the present embodiments, the terminal may automatically display multiple associated interfaces by receiving a touch operation on the display and based on the touch operation, and further adjust the browsing direction and speed in the automatic browsing mode through the detected sliding operation. That is, the automatic browsing method proposed in the present disclosure not only triggers the automatic browsing mode, but also provides precise control of the automatic browsing mode, which reduces the complexity of the browsing operation and meets the personalized needs of the browsing mode on the basis of realizing automatic browsing, thereby greatly improving the intelligence of the terminal.

Based on the above embodiments, in further embodiments of the present disclosure, FIGS. 22A-22G are schematic views I of an automatic browsing method.

In some embodiments of the present disclosure, as shown in FIG. 22A, the terminal may display the current interface in the display, where the current interface may be an interface in a reading software. At this time, the user may hold the terminal with both hands.

Further, in the embodiments of the present disclosure, as shown in FIG. 22B, when the terminal displays the current interface, the first touch operation of the user may be detected in the first region and the second region; where the first region and the second region may be the left side and the right side of the display of the terminal, respectively, and the first touch operation may be a press operation of the user. That is, when the user holds the terminal with both hands, the user's left and right thumbs may press the edge of the display. When the touch time of the first touch operation is greater than a preset time threshold, that is, when the press operation is a long-time press, the terminal may turn on the automatic browsing mode, and the terminal may call out a reminder hot zone in the first region and the second region respectively. For example, a black edge may be called out on each of the both sides of the display, thereby indicating that the terminal has turned on the automatic browsing mode.

It should be noted that in the embodiments of the present disclosure, the terminal may preset the preset direction to be upward browsing and the preset speed to be low speed in the automatic browsing mode. Therefore, after the terminal turns on the automatic browsing mode through the first touch operation, the current interface of the reading software and other interfaces related to the current interface may be displayed according to the upward browsing direction and the low speed.

Further, in the embodiments of the present disclosure, as shown in FIG. 22C, the terminal may further call out a browsing hot zone when the automatic browsing mode is turned on. The browsing hot zone may indicate the preset direction and the preset speed in the automatic browsing mode.

In some embodiments, when displaying the preset direction and preset speed, the browsing hot zone may apply set icons to represent the preset speed and preset direction, or may directly display the preset speed and preset direction by text expression. For example, the terminal may indicate upward browsing by the direction of an arrow displayed in the browsing hot zone and indicate low speed by the number of arrows.

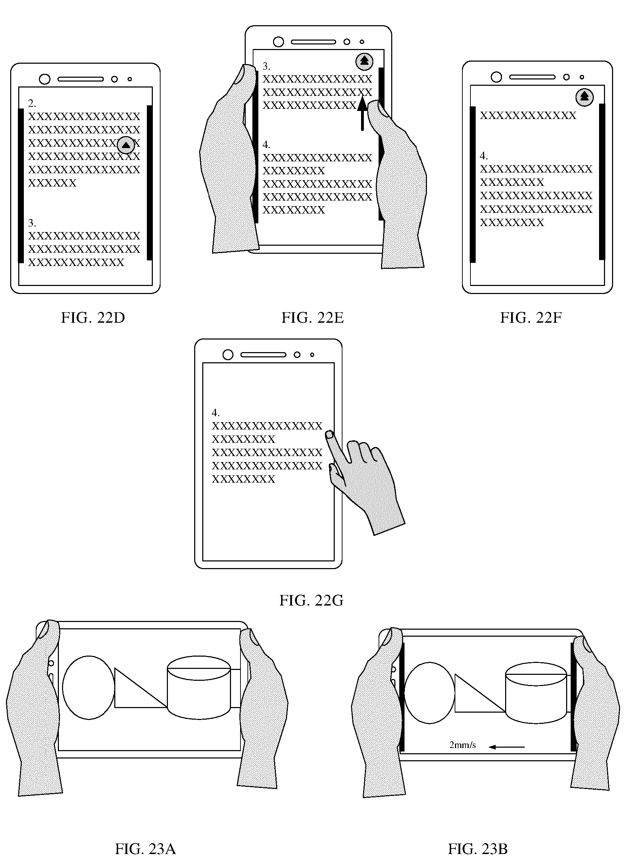

It is understood that in the embodiments of the present disclosure, as shown in FIG. 22D, after the automatic browsing mode is turned on, the terminal does not turn off the automatic browsing mode even if the end of the first touch operation is detected in the first region and the second region, but continues to display the associated interface of the reading software according to the preset direction and the preset speed.

In other words, after the automatic browsing mode is triggered by the user's long-press operation, the terminal continues to maintain the automatic browsing mode and does not end the automatic browsing mode even if the user releases the thumbs of both hands.

Further, in the embodiments of the present disclosure, as shown in FIG. 22E, the terminal may further detect the sliding operation in the third region in the display during the process of displaying the associated interface of the reading software in the preset direction and at the preset speed. The third region may be a region in the display of the terminal that includes the first region or the second region.

Exemplarily, in the present disclosure, the terminal may detect the sliding operation in or near the second region that is on the right side of the display. For example, after the terminal turns on the automatic browsing mode through the user's first touch operation, the user keeps the two-finger long-press state and then the finger on the right side of the terminal slides upward, such that the terminal is able to detect the sliding operation in the sliding direction of sliding upward.

It should be noted that in the present disclosure, after detecting the sliding operation in the third region, the terminal may further adjust the preset direction and preset speed in the automatic browsing mode according to the sliding direction and sliding distance of the sliding operation.

In other words, in the present disclosure, when the sliding operation is detected in the third region in cases of the terminal being in the automatic browsing mode, the terminal may adjust the browsing direction and speed based on the sliding operation.

Exemplarily, in the present disclosure, the sliding direction of the sliding operation is upward sliding, and the terminal may choose to increase the preset speed of displaying. Specifically, the terminal may determine the sliding distance of the sliding operation, and then increase the preset speed based on the sliding distance.

It can be understood that in the present disclosure, after finishing adjusting the preset direction and preset speed according to the sliding direction and sliding distance of the sliding operation, the terminal obtains the adjusted direction and adjusted speed. For example, the adjusted direction is still upward browsing and the adjusted speed becomes medium speed, and in this case, the terminal may browse the associated interface of the reading software in the way of the combination of "upward browsing + medium speed". In addition, the terminal may further indicate the adjusted direction and adjusted speed through the browsing hot zone. For example, the terminal may indicate the upward browsing by the direction of the arrows displayed in the browsing hot zone, and indicate the medium speed by the number of arrows.

Further, in the embodiments of the present disclosure, as shown in FIG. 22F, after the terminal completes the adjustment of the preset direction and the preset speed of the automatic browsing mode through the detected sliding operation, even if an end of the first touch operation is detected in the first region and the second region or an end of the sliding operation is detected in the third region, the terminal does not turn off the automatic browsing mode, but continues to display the associated interface of the reading software according to the adjusted direction and adjusted speed.

Further, in the embodiments of the present disclosure, as shown in FIG. 22G, after the terminal turns on the automatic browsing mode, whether the terminal displays the multiple interfaces according to the preset direction and preset speed or according to the adjusted direction and adjusted speed, the terminal may detect the second touch operation at any position in the display and turn off the automatic browsing mode in response to the second touch operation.

It should be noted that in the embodiments of the present disclosure, the second touch operation may be any touch screen operation such as a click operation, a press operation, etc., and the second touch operation is configured to turn off the automatic browsing mode.

Exemplarily, in the present disclosure, the terminal may close the reminder hot zone while turning off the automatic browsing mode after the second touch operation is detected.

Exemplarily, in the present disclosure, the terminal may close the browsing hot zone while turning off the automatic browsing mode after the second touch operation is detected.

By virtue of the automatic browsing method proposed in the present embodiments, the terminal may automatically display multiple associated interfaces by receiving a touch operation on the display and based on the touch operation, and further adjust the browsing direction and speed in the automatic browsing mode through the detected sliding operation. That is, the automatic browsing method proposed in the present disclosure not only triggers the automatic browsing mode, but also provides precise control of the automatic browsing mode, which reduces the complexity of the browsing operation and meets the personalized needs of the browsing mode on the basis of realizing automatic browsing, thereby greatly improving the intelligence of the terminal. Based on the above embodiments, in further embodiments of the present disclosure, FIGS. 23A-23I are schematic views II of an automatic browsing method.

In some embodiments, as shown in FIG. 23A, the terminal may display the current interface in the display, where the current interface may be an interface displaying partial image information of an enlarged frame of an image. At this time, the user may hold the terminal with both hands.

Further, in the embodiments of the present disclosure, as shown in FIG. 22B, when the terminal displays the current interface, the first touch operation of the user may be detected in the first region and the second region; where the first region and the second region may be the left side and the right side of the display of the terminal, respectively, and the first touch operation may be a press operation of the user. That is, when the user holds the terminal with both hands, the user's left and right thumbs may press the edge of the display. When the touch pressure of the first touch operation is greater than a preset pressure threshold, the terminal may turn on the automatic browsing mode, and the terminal may call out a reminder hot zone in the first region and the second region respectively. For example, a black edge may be called out on each of both sides of the display, thereby indicating that the terminal has turned on the automatic browsing mode.

It should be noted that in the embodiment of the present disclosure, the terminal may preset the preset direction to be leftward browsing and the preset speed to be 2mm/s in the automatic browsing mode. Therefore, after the terminal turns on the automatic browsing mode through the first touch operation, the current interface corresponding to the frame of the image and other interfaces related to the current interface may be displayed according to the left browsing direction and the browsing speed of 2mm/s.

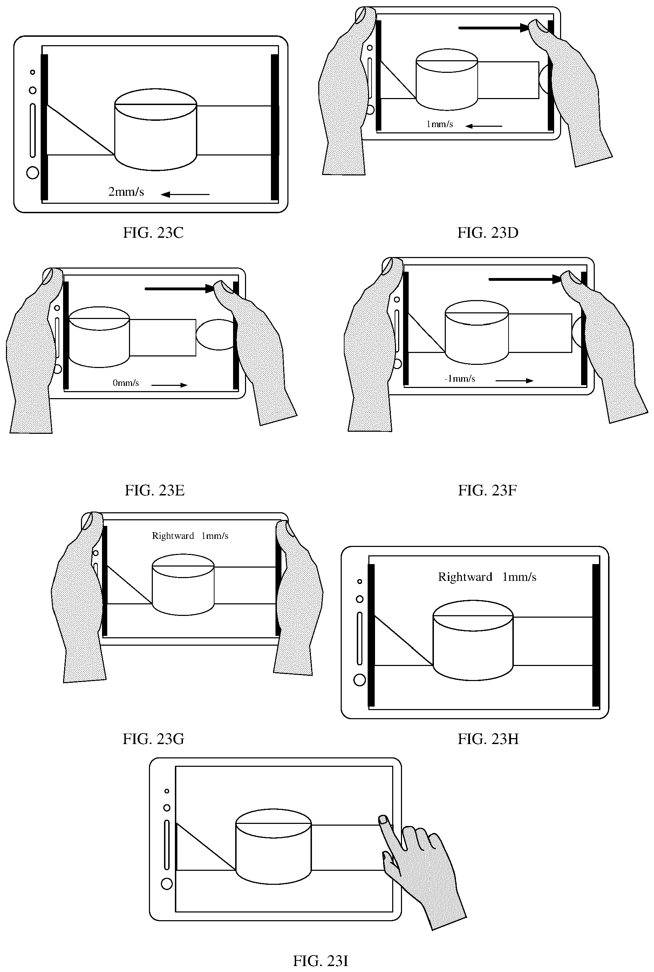

It can be understood that in the embodiments of the present disclosure, as shown in FIG. 23C, after turning on the automatic browsing mode, the terminal does not turn off the automatic browsing mode even if the end of the first touch operation is detected in the first region and the second region, but continues to display the associated interface corresponding to the frame of the image according to the preset direction and the preset speed.

In other words, the terminal may continue to maintain the automatic browsing mode and not end the automatic browsing mode even if the user releases the thumbs of both hands after the automatic browsing mode is triggered by the user's long-press operation.

Further, in the embodiments of the present disclosure, as shown in FIG. 23D, the terminal may further detect the sliding operation in the third region in the display during the process of displaying the associated interface corresponding to the frame of the image according to the preset direction and the preset speed. The third region may be a region in the display of the terminal that includes the first region and the second region.

Exemplarily, in the present disclosure, the terminal may detect the sliding operation in or near the first region that is on the left side of the display. For example, after the terminal turns on the automatic browsing mode through the user's first touch operation, the user keeps the two-finger long-press state and then the finger on the left side of the terminal slides rightward, such that the terminal is able to detect the sliding operation in the sliding direction of sliding rightward.

It should be noted that in the present disclosure, after detecting the sliding operation in the third region, the terminal may further adjust the preset direction and preset speed in the automatic browsing mode according to the sliding direction and sliding distance of the sliding operation.

In other words, in the present disclosure, when the sliding operation is detected in the third region in cases of the terminal being in the automatic browsing mode, the terminal may adjust the browsing direction and speed based on the sliding operation.

Exemplarily, in the present disclosure, the sliding direction of the sliding operation is rightward sliding, and the terminal may choose to reduce the preset speed of displaying. Specifically, the terminal may reduce the preset speed in the process of continuous movement of the sliding operation and keep reducing the preset speed until the end of the sliding operation. For example, at the end of the sliding operation, the preset speed is reduced to 1 mm/s.

Further, in the embodiments of the present disclosure, as shown in FIG. 23E, in cases of the terminal reducing the preset speed according to the sliding operation, when the preset speed is reduced to less than 0, the preset direction may be adjusted to reverse. For example, when the terminal reduces the preset speed to 0 according to the sliding operation, the terminal may display the associated interface in the adjusted direction of browsing rightward.

In other words, in the present disclosure, after the terminal reduces the preset speed to a negative number, the terminal may display in the reverse direction, i.e., the original preset direction will be changed.

Further, in the embodiments of the present disclosure, as shown in FIG. 23F, after the terminal adjusts the preset direction to reverse according to the sliding operation, when the sliding operation does not end, the terminal continues to display rightward based on the sliding operation while the adjusted speed also continues to decrease, such as to -1mm/s.

Further, in the embodiments of the present disclosure, as shown in FIG. 23G, the terminal may further call out an adjustment hot zone after the sliding operation is detected in the third region in the display. The adjustment hot zone may display the adjustment way for browsing direction and speed of the terminal.

In some embodiments, the adjustment hot zone may apply set icons to show the adjusted speed and adjusted direction when displaying the adjusted direction and adjusted speed, or may directly show the adjusted speed and adjusted direction by text expression.

Exemplarily, in the present disclosure, the terminal may indicate the adjusted direction and adjusted speed through the adjustment the hot zone. For example, after the terminal has adjusted the preset direction and preset speed according to the sliding operation, the terminal may indicate that the adjusted direction is browsing rightward and the adjusted speed is -1mm/s (leftward as positive) through the "rightward" and "1mm/s" displayed by the adjustment hot zone.

Further, in the embodiments of the present disclosure, as shown in FIG. 23H, after the terminal completes the adjustment of the preset direction and the preset speed in the automatic browsing mode through the detected sliding operation, even if an end of the first touch operation is detected in the first region and the second region or an end of the sliding operation is detected in the third region, the terminal does not turn off the automatic browsing mode, but continues to display the associated interface corresponding to the frame of the image according to the adjusted direction and adjusted speed.

Further, in the embodiments of the present disclosure, as shown in FIG. 23I, after the terminal turns on the automatic browsing mode, whether the terminal displays the multiple interfaces according to the preset direction and preset speed or according to the adjusted direction and adjusted speed, the terminal may detect the second touch operation at any position in the display and turn off the automatic browsing mode in response to the second touch operation.

It should be noted that in the embodiments of the present disclosure, the second touch operation may be any touch screen operation such as a click operation, a press operation, etc., and the second touch operation is configured to turn off the automatic browsing mode.

Exemplarily, in the present disclosure, the terminal may close the reminder hot zone while turning off the automatic browsing mode after the second touch operation is detected.

Exemplarily, in the present disclosure, the terminal may close the browsing hot zone while turning off the automatic browsing mode after the second touch operation is detected.

By virtue of the automatic browsing method proposed in the present embodiments, the terminal may automatically display multiple associated interfaces by receiving a touch operation on the display and based on the touch operation, and further adjust the browsing direction and speed in the automatic browsing mode through the detected sliding operation. That is, the automatic browsing method proposed in the present disclosure not only triggers the automatic browsing mode, but also provides precise control of the automatic browsing mode, which reduces the complexity of the browsing operation and meets the personalized needs of the browsing mode on the basis of realizing automatic browsing, thereby greatly improving the intelligence of the terminal.

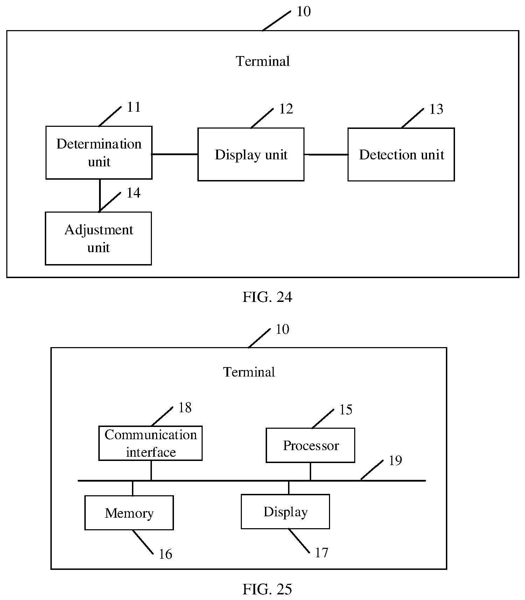

Based on the above embodiments, in further embodiments of the present disclosure, FIG. 24 is a schematic view of a composition structure of a terminal. As shown in FIG. 24, the terminal 10 proposed in the present embodiments may include: a determination unit 11, a display unit 12, a detection unit 13, and an adjustment unit 14.

The determination unit 11 is configured to, in response to a first touch operation corresponding to a first region and a second region of a display, determine a touch parameter of the first touch operation.

The display unit 12 is configured to display a current interface and an associated interface of the current interface based on a preset direction and a preset speed in response to the touch parameter meeting a trigger condition.

The detection unit 13 is configured to detect a sliding operation in a third region; where the third region is a region of the display including the first region and/or the second region.

The determination unit 11 is further configured to determine a sliding direction and a sliding distance of the sliding operation.

The adjustment unit 14 is configured to adjust the preset speed and preset direction according to the sliding direction and the sliding distance.

The display unit 12 is further configured to display the current interface and the associated interface based on an adjusted speed and an adjusted direction.

FIG. 25 is another schematic view of a composition structure of a terminal. As shown in FIG. 25, the terminal 10 proposed in the present embodiments may include a processor 15, a memory 16 storing executable instructions of the processor 15, and a display 17. Further, the terminal 10 may further include a communication interface 18, and a bus 19 connected to the processor 15, the memory 16, the display 17, and the communication interface 18.

In the embodiments of the present disclosure, the processor 15 may be at least one of application specific integrated circuit (ASIC), digital signal processor (DSP), digital signal processing device (DSPD), programmable logic device (PLD), field programmable gate array (FPGA), central processing unit (CPU), controller, microcontroller, and microprocessor. It will be understood that for different devices, the electronic devices configured to implement the above processor functions may also be others, without limitation herein. The terminal 10 may further include the memory 16, which may be connected to the processor 15. The memory 16 is configured to store executable program code, which includes computer operating instructions, and the memory 16 may include high-speed RAM memory and may include non-volatile memory, for example, at least two disk memories.

In the embodiments of the present disclosure, the bus 19 is configured to connect the communication interface 18, the processor 15, and the memory 16 and the intercommunication between these devices.

In the embodiments of the present disclosure, the memory 16 is configured to store instructions and data.

Further, in the embodiments of the present disclosure, the processor 15 is configured to, in response to a first touch operation corresponding to a first region and a second region of a display, determine a touch parameter of the first touch operation; display a current interface and an associated interface of the current interface based on a preset direction and a preset speed in response to the touch parameter meeting a trigger condition; detect a sliding operation in a third region and determine a sliding direction and a sliding distance of the sliding operation, where the third region is a region of the display including the first region and/or the second region; adjust the preset speed and preset direction according to the sliding direction and the sliding distance, and display the current interface and the associated interface based on an adjusted speed and an adjusted direction.

In practical applications, the memory 16 may be volatile memory, such as random-access memory (RAM); or non-volatile memory, such as read-only memory (ROM), flash memory, hard disk drive (HDD), or solid-state drive (SSD); or a combination of the above types of memory, and provide instructions and data to the processor 15.

Each functional module in the embodiments may be integrated in a single processing unit, or each unit may be physically present separately, or two or more units may be integrated in a single unit. The above integrated unit may be implemented either in the form of hardware or in the form of a software function module.

The integrated unit, when implemented in the form of a software function module and sold or used as a stand-alone product, may be stored in a computer-readable storage medium. Based on the above understanding, the part of the technical solution of the embodiments that essentially or rather contributes to the prior art or all or part of this technical solution can be embodied in the form of a software product, which is stored in a storage medium and includes multiple instructions to enable a computer device (which may be a personal computer, server, or network device, etc.) or a processor to perform all or some of the steps of the method embodiments. The storage medium includes: USB flash drive, mobile hard disk, read only memory (ROM), random access memory (RAM), disk or CD-ROM, and other media that can store program code.

In summary, a terminal proposed in embodiments of the present disclosure may perform: in response to a first touch operation corresponding to a first region and a second region of a display, determining a touch parameter of the first touch operation; displaying a current interface and an associated interface of the current interface based on a preset direction and a preset speed in response to the touch parameter meeting a trigger condition; detecting a sliding operation in a third region and determining a sliding direction and a sliding distance of the sliding operation; where the third region is a region of the display including the first region and/or the second region; and adjusting the preset speed and preset direction according to the sliding direction and the sliding distance, and displaying the current interface and the associated interface based on an adjusted speed and an adjusted direction. In this way, the automatic browsing method proposed in the present disclosure allows the terminal to automatically display multiple associated interfaces by receiving a touch operation at the display and based on the touch operation. In addition, the terminal may further adjust the browsing direction and speed in the automatic browsing mode through the detected sliding operation. That is, the automatic browsing method proposed in the present disclosure not only triggers the automatic browsing mode, but also provides precise control of the automatic browsing mode, which reduces the complexity of the browsing operation and meets the personalized needs of the browsing mode on the basis of realizing automatic browsing, thereby greatly improving the intelligence of the terminal.

Embodiments of the present disclosure further provide a computer-readable storage medium storing a program, which implements the automatic browsing method as described above when executed by a processor.

Specifically, the program instructions corresponding to the automatic browsing method in the embodiments may be stored on a storage medium such as a CD, a hard disk, a U disk, etc. When the program instructions corresponding to the automatic browsing method in the storage medium are read or executed by an electronic device, the following steps are performed.

in response to a first touch operation corresponding to a first region and a second region of a display, determining a touch parameter of the first touch operation.

displaying a current interface and an associated interface of the current interface based on a preset direction and a preset speed in response to the touch parameter meeting a trigger condition.

detecting a sliding operation in a third region and determining a sliding direction and a sliding distance of the sliding operation; where the third region is a region of the display including the first region and/or the second region.

adjusting the preset speed and preset direction according to the sliding direction and the sliding distance, and displaying the current interface and the associated interface based on an adjusted speed and an adjusted direction.

It should be understood by those skilled in the art that the embodiments of the present disclosure may be provided as methods, terminals, or computer program products. Therefore, the present disclosure may take the form of a hardware embodiment, a software embodiment, or an embodiment combining software and hardware aspects. Further, the present disclosure may take the form of a computer program product implemented on one or more computer-usable storage media (including, but not limited to, disk memory and optical memory, etc.) that contain computer-usable program code therein.

The present disclosure is described with reference to schematic views and/or block diagrams of methods, devices (systems), and computer program products implemented according to the embodiments of the present disclosure. It can be understood that each of the processes and/or blocks in the process schematic view and/or block diagram and the combination of the processes and/or blocks in the process schematic view and/or block diagram may be implemented by the computer program instructions. These computer program instructions may be provided to a processor of a general-purpose computer, a specialized computer, an embedded processor, or other programmable data processing devices to produce a machine, such that an apparatus configured to implement the functions specified in one process or multiple processes in the process schematic view and/or one block or multiple blocks in the block diagram may be generated through the instructions executed by the processor of the computer or other programmable data processing devices.

These computer program instructions may also be stored in a computer-readable memory capable of directing the computer or other programmable data processing devices to operate in a particular manner, such that the instructions stored in the computer-readable memory produce an article of manufacture including an instruction device that implements the functions specified in one process or multiple processes in the process schematic view and/or one block or multiple blocks in the block diagram.

These computer program instructions may also be loaded onto a computer or other programmable data processing devices such that a series of operational steps are performed on the computer or other programmable devices to produce computer-implemented processing, such that the instructions executed on the computer or other programmable devices provide steps configured to implement the functions specified in one process or multiple processes in the process schematic view and/or one block or multiple blocks in the block diagram.

The foregoing is only some embodiments of the present disclosure and is not configured to limit the scope of the present disclosure.

### Industrial Utility

In the embodiments of the present disclosure, the terminal may automatically display multiple associated interfaces by receiving a touch operation on the display and based on the touch operation, and further adjust the browsing direction and speed in the automatic browsing mode through the detected sliding operation. That is, the automatic browsing method proposed in the present disclosure not only triggers the automatic browsing mode, but also provides precise control of the automatic browsing mode, which reduces the complexity of the browsing operation and meets the personalized needs of the browsing mode on the basis of realizing automatic browsing, thereby greatly improving the intelligence of the terminal.

## Claims

1. An automatic browsing method, comprising:
in response to a first touch operation corresponding to a first region and a second region of a display, determining (101) a touch parameter of the first touch operation;
displaying (102) a current interface and an associated interface of the current interface based on a preset direction and a preset speed in response to the touch parameter meeting a trigger condition;
detecting (103) a sliding operation in a third region and determining (103) a sliding direction and a sliding distance of the sliding operation; wherein the third region is a region of the display comprising the first region and/or the second region; and
adjusting (104) the preset speed and preset direction according to the sliding direction and the sliding distance, and displaying (104) the current interface and the associated interface based on an adjusted speed and an adjusted direction;
**characterized in that**, after determining (101) the touch parameter of the first touch operation, the method further comprises:
calling out a browsing hot zone and displaying the preset direction and the preset speed through the browsing hot zone, in response to the touch parameter meeting the trigger condition.

2. The method according to claim 1, wherein the preset direction is upward browsing or downward browsing.

3. The method according to claim 2, wherein the adjusting (104) the preset speed and preset direction according to the sliding direction and the sliding distance comprises:
obtaining the adjusted speed by increasing the preset speed according to the sliding distance, in response to the sliding direction being the upward sliding; and
obtaining the adjusted speed by reducing the preset speed according to the sliding distance, in response to the sliding direction being the downward sliding.

4. The method according to claim 2, wherein the adjusting (104) the preset speed and preset direction according to the sliding direction and the sliding distance comprises:
obtaining the adjusted speed by increasing the preset speed according to the sliding distance, in response to the sliding direction being the same as the preset direction; and
obtaining the adjusted speed by reducing the preset speed according to the sliding distance, in response to the sliding direction being different from the preset direction.

5. The method according to claim 3 or 4, further comprising:
in response to the preset direction being the upward browsing, obtaining the adjusted direction by adjusting the preset direction to the downward browsing after reducing the preset speed to less than 0; and
in response to the preset direction being the downward browsing, obtaining the adjusted direction by adjusting the preset direction to the upward browsing after reducing the preset speed to less than 0.

6. The method according to claim 3 or 4, further comprising:
determining an adjustment ratio based on the sliding distance;
increasing or reducing the preset speed according to the adjustment ratio.

7. The method according to claim 3 or 4, further comprising:
determining an adjustment value based on the sliding distance;
increasing or reducing the preset speed according to the adjustment value.

8. The method according to claim 1, wherein the touch parameter comprises at least one of: touch time, touch pressure, touch direction, and touch distance; after the in response to a first touch operation corresponding to a first region and a second region of a display, determining (101) a touch parameter of the first touch operation, further comprising:
determining whether the touch parameter meets a trigger condition;
wherein the triggering condition comprises at least one of:
the touch time being greater than a preset time threshold, the touch pressure being greater than a preset pressure threshold, the touch direction being a preset trigger direction, and the touch distance being greater than a preset distance threshold.

9. The method according to claim 1, after the adjusting (104) the preset speed and preset direction according to the sliding direction and the sliding distance, further comprising:
displaying the adjusted speed and the adjusted direction through the browsing hot zone.

10. The method according to claim 1, further comprising:
after the first touch operation ends, continuing to display the current interface and the associated interface based on the preset direction and the preset speed and displaying the preset direction and the preset speed through the browsing hot zone.

11. The method according to claim 10, further comprising:
determining a target interface that is currently displayed in response to detecting a second touch operation on the display; and
stopping displaying based on the preset direction and the preset speed and statically displaying the target interface in response to the second touch operation meeting a preset turn-off condition.

12. The method according to claim 1, further comprising:
calling out a reminder hot zone in each of the first region and the second region; wherein the reminder hot zone is configured to characterize turning on of the automatic browsing mode.

13. A terminal (10), comprising a processor (15), and a memory (16) storing instructions; wherein the instructions, when executed by the processor (15), cause the processor (15) to perform the method according to any one of claims 1-12.

14. A non-transitory computer-readable storage medium, storing a program; wherein the program is configured to be executed by a processor to implement the method according to any one of claims 1-12.

## Patentansprüche

1. Automatisches Suchverfahren, umfassend:
in Reaktion auf einen ersten Berührungsvorgang, der einer ersten Region und einer zweiten Region einer Anzeige entspricht, Bestimmen (101) eines Berührungsparameters des ersten Berührungsvorgangs;
Anzeigen (102) einer aktuellen Schnittstelle und einer zugehörigen Schnittstelle der aktuellen Schnittstelle basierend auf einer voreingestellten Richtung und einer voreingestellten Geschwindigkeit in Reaktion darauf, dass der Berührungsparameter eine Auslösebedingung erfüllt;
Erfassen (103) eines Schiebevorgangs in einer dritten Region und Bestimmen (103) einer Schieberichtung und einer Schiebedistanz des Schiebevorgangs; wobei die dritte Region eine Region der Anzeige ist, die die erste Region und/oder die zweite Region umfasst; und
Anpassen (104) der voreingestellten Geschwindigkeit und der voreingestellten Richtung gemäß der Schieberichtung und der Schiebedistanz und Anzeigen (104) der aktuellen Schnittstelle und der zugehörigen Schnittstelle basierend auf einer angepassten Geschwindigkeit und einer angepassten Richtung;
**dadurch gekennzeichnet, dass** das Verfahren nach dem Bestimmen (101) des Berührungsparameters des ersten Berührungsvorgangs ferner Folgendes umfasst:
Aufrufen einer Such-Hotzone und Anzeigen der voreingestellten Richtung und der voreingestellten Geschwindigkeit über die Such-Hotzone in Reaktion darauf, dass der Berührungsparameter die Auslösebedingung erfüllt.

2. Verfahren nach Anspruch 1, wobei die voreingestellte Richtung Aufwärtssuchen oder Abwärtssuchen ist.

3. Verfahren nach Anspruch 2, wobei das Anpassen (104) der voreingestellten Geschwindigkeit und der voreingestellten Richtung gemäß der Schieberichtung und der Schiebedistanz Folgendes umfasst:
Erhalten der angepassten Geschwindigkeit durch Erhöhen der voreingestellten Geschwindigkeit gemäß der Schiebedistanz in Reaktion darauf, dass die Schieberichtung das Aufwärtsschieben ist; und
Erhalten der angepassten Geschwindigkeit durch Reduzieren der voreingestellten Geschwindigkeit gemäß der Schiebedistanz in Reaktion darauf, dass die Schieberichtung das Abwärtsschieben ist.

4. Verfahren nach Anspruch 2, wobei das Anpassen (104) der voreingestellten Geschwindigkeit und der voreingestellten Richtung gemäß der Schieberichtung und der Schiebedistanz Folgendes umfasst:
Erhalten der angepassten Geschwindigkeit durch Erhöhen der voreingestellten Geschwindigkeit gemäß der Schiebedistanz in Reaktion darauf, dass die Schieberichtung gleich wie die voreingestellte Richtung ist; und
Erhalten der angepassten Geschwindigkeit durch Reduzieren der voreingestellten Geschwindigkeit gemäß der Schiebedistanz in Reaktion darauf, dass sich die Schieberichtung von der voreingestellten Richtung unterscheidet.

5. Verfahren nach Anspruch 3 oder 4, ferner umfassend:
in Reaktion darauf, dass die voreingestellte Richtung das Aufwärtssuchen ist, Erhalten der angepassten Richtung durch Anpassen der voreingestellten Richtung an das Abwärtssuchen nach dem Reduzieren der voreingestellten Geschwindigkeit auf weniger als 0; und
in Reaktion darauf, dass die voreingestellte Richtung das Abwärtssuchen ist, Erhalten der angepassten Richtung durch Anpassen der voreingestellten Richtung an das Aufwärtssuchen nach dem Reduzieren der voreingestellten Geschwindigkeit auf weniger als 0.

6. Verfahren nach Anspruch 3 oder 4, ferner umfassend:
Bestimmen des Anpassungsverhältnisses basierend auf der Schiebedistanz;
Erhöhen oder Reduzieren der voreingestellten Geschwindigkeit gemäß dem Anpassungsverhältnis.

7. Verfahren nach Anspruch 3 oder 4, ferner umfassend:
Bestimmen eines Anpassungswerts basierend auf der Schiebedistanz;
Erhöhen oder Reduzieren der voreingestellten Geschwindigkeit gemäß dem Anpassungswert.

8. Verfahren nach Anspruch 1, wobei der Berührungsparameter mindestens eines von Folgenden umfasst: Berührungszeit, Berührungsdruck, Berührungsrichtung und Berührungsdistanz; ferner umfassend nach dem Bestimmen (101) eines Berührungsparameters des ersten Berührungsvorgangs in Reaktion auf einen ersten Berührungsvorgang, der einer ersten Region und einer zweiten Region einer Anzeige entspricht:
Bestimmen, ob der Berührungsparameter eine Auslösebedingung erfüllt;
wobei die Auslösebedingung mindestens eines von Folgendem umfasst:
die Berührungszeit ist länger als eine voreingestellte Zeitschwelle, der Berührungsdruck ist höher als eine voreingestellte Druckschwelle, die Berührungsrichtung ist eine voreingestellte Auslöserichtung und die Berührungsdistanz ist größer als eine voreingestellte Distanzschwelle.

9. Verfahren nach Anspruch 1, ferner umfassend nach dem Anpassen (104) der voreingestellten Geschwindigkeit und der voreingestellten Richtung gemäß der Schieberichtung und der Schiebedistanz:
Anzeigen der angepassten Geschwindigkeit und der angepassten Richtung über die Such-Hotzone.

10. Verfahren nach Anspruch 1, ferner umfassend:
nach Beendigung des ersten Berührungsvorgangs Fortsetzen des Anzeigens der aktuellen Schnittstelle und der zugehörigen Schnittstelle basierend auf der voreingestellten Richtung und der voreingestellten Geschwindigkeit und Anzeigen der voreingestellten Richtung und der voreingestellten Geschwindigkeit über die Such-Hotzone.

11. Verfahren nach Anspruch 10, ferner umfassend:
Bestimmen einer Zielschnittstelle, die gegenwärtig angezeigt wird, in Reaktion auf ein Erfassen eines zweiten Berührungsvorgangs auf der Anzeige; und
Stoppen des Anzeigens basierend auf der voreingestellten Richtung und der voreingestellten Geschwindigkeit und statisches Anzeigen der Zielschnittstelle in Reaktion darauf, dass der zweite Berührungsvorgang eine voreingestellte Abschaltbedingung erfüllt.

12. Verfahren nach Anspruch 1, ferner umfassend:
Aufrufen einer Erinnerungs-Hotzone in der ersten und der zweiten Region; wobei die Erinnerungs-Hotzone dazu ausgelegt ist, Einschalten des automatischen Suchmodus zu kennzeichnen.

13. Endgerät (10), umfassend einen Prozessor (15) und einen Speicher (16), der Anweisungen speichert; wobei die Anweisungen bei Ausführung durch den Prozessor (15) den Prozessor (15) zum Durchführen des Verfahrens nach einem der Ansprüche 1-12 veranlassen.

14. Nichtflüchtiges computerlesbares Speichermedium, das ein Programm speichert; wobei das Programm dazu ausgelegt ist, von einem Prozessor ausgeführt zu werden, um das Verfahren nach einem der Ansprüche 1-12 zu implementieren.

## Revendications

1. Procédé de navigation automatique, comprenant :
en réponse à une première opération de toucher correspondant à une première région et une deuxième région d'un écran, la détermination (101) d'un paramètre de toucher de la première opération de toucher ;
l'affichage (102) d'une interface courante et d'une interface associée de l'interface courante sur la base d'une direction prédéfinie et d'une vitesse prédéfinie en réponse au fait que le paramètre de toucher satisfait à une condition de déclenchement ;
la détection (103) d'une opération de glissement dans une troisième région et la détermination (103) d'une direction de glissement et d'une distance de glissement de l'opération de glissement ; la troisième région étant une région de l'écran qui comprend la première région et/ou la deuxième région ; et
l'ajustement (104) de la vitesse prédéfinie et de la direction prédéfinie en fonction de la direction de glissement et de la distance de glissement, et l'affichage (104) de l'interface courante et de l'interface associée sur la base d'une vitesse ajustée et d'une direction ajustée ;
**caractérisé en ce que**, après la détermination (101) du paramètre de toucher de la première opération de toucher, le procédé comprend en outre :
l'appel d'une zone sensible de navigation et l'affichage de la direction prédéfinie et de la vitesse prédéfinie à travers la zone sensible de navigation, en réponse au fait que le paramètre de toucher satisfait à la condition de déclenchement.

2. Procédé selon la revendication 1, dans lequel la direction prédéfinie est une navigation vers le haut ou une navigation vers le bas.

3. Procédé selon la revendication 2, dans lequel l'ajustement (104) de la vitesse prédéfinie et de la direction prédéfinie en fonction de la direction de glissement et de la distance de glissement comprend :
l'obtention de la vitesse ajustée par augmentation de la vitesse prédéfinie en fonction de la distance de glissement, en réponse au fait que la direction de glissement est le glissement vers le haut ; et
l'obtention de la vitesse ajustée par réduction de la vitesse prédéfinie en fonction de la distance de glissement, en réponse au fait que la direction de glissement est le glissement vers le bas.

4. Procédé selon la revendication 2, dans lequel l'ajustement (104) de la vitesse prédéfinie et de la direction prédéfinie en fonction de la direction de glissement et de la distance de glissement comprend :
l'obtention de la vitesse ajustée par augmentation de la vitesse prédéfinie en fonction de la distance de glissement, en réponse au fait que la direction de glissement est la même que la direction prédéfinie ; et l'obtention de la vitesse ajustée par réduction de la vitesse prédéfinie en fonction de la distance de glissement, en réponse au fait que la direction de glissement est différente de la direction prédéfinie.

5. Procédé selon la revendication 3 ou 4, comprenant en outre :
en réponse au fait que la direction prédéfinie est la navigation vers la haut, l'obtention de la direction ajustée par ajustement de la direction prédéfinie sur la navigation vers le bas après réduction de la vitesse prédéfinie à moins de 0 ; et
en réponse au fait que la direction prédéfinie est la navigation vers le bas, l'obtention de la direction ajustée par ajustement de la direction prédéfinie sur la navigation vers le haut après réduction de la vitesse prédéfinie à moins de 0.

6. Procédé selon la revendication 3 ou 4, comprenant en outre :
la détermination d'un ratio d'ajustement d'après la distance de glissement ;
l'augmentation ou la réduction de la vitesse prédéfinie en fonction du ratio d'ajustement.

7. Procédé selon la revendication 3 ou 4, comprenant en outre :
la détermination d'une valeur d'ajustement d'après la distance de glissement ;
l'augmentation ou la réduction de la vitesse prédéfinie en fonction de la valeur d'ajustement.

8. Procédé selon la revendication 1, dans lequel le paramètre de toucher comprend au moins l'un des paramètres suivants : heure du toucher, pression du toucher, direction du toucher et distance du toucher ; et comprend en outre, après la détermination (101) d'un paramètre de toucher de la première opération de toucher, en réponse à une première opération de toucher correspondant à une première région et une deuxième région d'un écran :
la détermination du fait que le paramètre de toucher satisfait à une condition de déclenchement ;
la condition de déclenchement comprenant au moins l'une des conditions suivantes :
l'heure du toucher est supérieure à un seuil horaire prédéfini, la pression du toucher est supérieure à un seuil de pression prédéfini, la direction du toucher est une direction de déclenchement prédéfinie, et la distance du toucher est supérieure à un seuil de distance prédéfini.

9. Procédé selon la revendication 1, comprenant en outre, après l'ajustement (104) de la vitesse prédéfinie et de la direction prédéfinie en fonction de la direction de glissement et de la distance de glissement :
l'affichage de la vitesse ajustée et de la direction ajustée à travers la zone sensible de navigation.

10. Procédé selon la revendication 1, comprenant en outre :
après la fin de la première opération de toucher, la continuation de l'affichage de l'interface courante et de l'interface associée selon la direction prédéfinie et la vitesse prédéfinie et l'affichage de la direction prédéfinie et de la vitesse prédéfinie à travers la zone sensible de navigation.

11. Procédé selon la revendication 10, comprenant en outre :
la détermination d'une interface cible qui est actuellement affichée en réponse à la détection d'une deuxième opération de toucher sur l'écran ; et
l'arrêt de l'affichage selon la direction prédéfinie et la vitesse prédéfinie et l'affichage statistique de l'interface cible en réponse au fait que la deuxième opération de toucher satisfait à une condition d'arrêt prédéfinie.

12. Procédé selon la revendication 1, comprenant en outre :
l'appel d'une zone sensible de rappel dans chacune de la première région et de la deuxième région ; la zone sensible de rappel étant configurée pour caractériser l'activation du mode de navigation automatique.

13. Terminal (10), comprenant un processeur (15), et une mémoire (16) stockant des instructions ;
lesquelles instructions, lorsqu'elles sont exécutées par le processeur (15), amenant le processeur (15) à mette en œuvre le procédé selon l'une quelconque des revendications 1 à 12.

14. Support de stockage non transitoire, lisible par ordinateur, stockant un programme ; lequel programme étant configuré pour être exécuté par un processeur pour mettre en œuvre le procédé selon l'une quelconque des revendications 1 à 12.
